# EUROPÄISCHE PATENTANMELDUNG

(11) **EP 1 285 888 A2**
(43) Veröffentlichungstag der Anmeldung: **26.02.2003**
(21) Anmeldenummer: 02017898.4
(22) Anmeldetag: 09.08.2002
(51) Int. Cl.: C03B 19/12, C03C 1/00, C03C 3/089

(54) **Verfahren zur Herstellung optischer Gläser und Farbgläser bei niederen Temperaturen**

(30) Priorität: 22.08.2001 DE 10141103; 13.07.2002 EP 02015738
(71) Anmelder: Schott Glas, 55122 Mainz (DE); CARL-ZEISS-STIFTUNG trading as SCHOTT GLAS, 55122 Mainz (DE)
(72) Erfinder: Freund, Jochen, 55128 Mainz (DE); Hentschel, Ruediger, Dr., 55294 Bodenheim (DE); Gierke, Monika, 65205 Wiesbaden (DE); Clasen, Rolf, Prof. Dr., 66125 Saarbrücken (DE); Kolberg, Uwe, Dr., 55252 Mainz-Kastel (DE)
(74) Vertreter: Sawodny, Michael-Wolfgang

(57) **Zusammenfassung**

Die Erfindung betrifft ein Verfahren zur Herstellung von optischen Gläsern und Farbgläsern mit Hilfe eines Flüssigphasensinterprozesses aus einem Ausgangsmaterial umfassend wenigstens SiO₂-Pulver sowie Zusatzstoffe zur Reduzierung der Temperatur des Sinter- und/oder Schmelzprozesses umfassend die nachfolgenden Schritte:
- die Ausgangsmaterialien werden in einem flüssigen Medium soweit hierin löslich gelöst und soweit hierin nicht löslich dispergiert ergebend eine Suspension
- aus dem gelösten und dispergierten Ausgangsmaterial wird einGrünkörper hergestellt
- der Grünkörper wird getrocknet
- der getrocknete Grünkörper wird bei Temperaturen geringer als 1200° C, insbesondere im Temperaturbereich von 600° C bis 1200° C flüssigphasengesintert.

## Beschreibung

Die Erfindung betrifft ein Verfahren zur Herstellung von optischen und/oder gefärbten Gläsern mit Hilfe eines Sinter- oder Schmelzprozesses. Unter einem Sinterprozeß versteht man einen Prozeß mit einer Viskosität η > 1 × 10⁸ dPa s und unter einem Schmelzprozeß einen Prozeß mit einem η < 1 × 10² dPa s. Im speziellen können mit diesem Verfahren Mehrkomponentengläser, insbesondere gefärbte Gläser hergestellt werden, die durch eine Halbleiterdotierung MX gefärbt werden, wobei unter M entweder Cd alleine oder Cd + Zn und unter X S, Se oder Te verstanden wird.

Aus dem Stand der Technik sind zur Herstellung von Gläsern mit Hilfe eines Sinterprozesses im wesentlichen zwei Methoden bekannt geworden:
- die Sol-Gel-Methode und
- die pulvertechnologische Methode

Eine Methode, nach der durch einen Sol-Gel-Prozeß ein Glas hergestellt werden kann, ist beispielsweise in der US 4,432,956 beschrieben. Hier wird jedoch nur die Herstellung von Kieselglas behandelt, welches bei Temperaturen von 1300 - 1500°C hergestellt wird.

Um neben SiO₂ noch weitere Komponenten bei der Glassynthese zu berücksichtigen, kann man sich Verfahren bedienen, wie sie in den Patentschriften DE 4129409 A1, EP 0233732 A1 und. US 5,091,115 beschrieben sind. Bei allen diesen Verfahren wird von Silizium-Alkoxiden, wie z.B. Tetraethoxisilan (TEOS) und anderen löslichen Verbindungen ausgegangen, die in der Regel mit alkoholischen Lösungsmitteln verarbeitet werden. Als Ausgangsmaterial für SiO₂ dient beispielsweise Tetraethoxisilan und für den Zusatz weiterer Glaskomponenten wie B₂O₃, Al₂O₃, Na₂O, ZnO oder P₂O₅ dienen Borsäuretrimethylester, Aluminiumtriisopropylat, Natriummethylat, Zink2-4pentandionat, Tributylphosphat oder auch andere Alkoxide als Ausgangsmaterialien. Diese Rohstoffe sind teilweise giftig, so daß die Sol-Gel-Methode aufgrund der verwendeten Rohstoffe insbesondere unter Umweltgesichtspunkten von Nachteil ist und bislang nur für beschichtete Gläser eingesetzt wird. Ein weiterer Nachteil der Sol-Gel-Methoden ist, daß der Prozeß aufgrund der teuren Rohstoffe kostenintensiv ist, einen hohen Zeitbedarf aufweist und aufgrund des hohen Trockenschwundes und der Rißbildung nicht auf große Bauteile anwendbar ist.

Ein Herstellungsprozeß, bei dem durch einen Sol-Gel-Prozeß ein mit CdSSe-dotiertes Farbglas hergestellt werden kann, ist in der JP 02221130 A beschrieben. Als SiO₂-Rohstoff benutzt dieses Verfahren jedoch die gleichen Silizium-Alkoxide, wie auch in der US 4,432,956 beschrieben, so daß es die gleichen Nachteile wie alle Sol-Gel-Verfahren aufweist, insbesondere unter Umweltgesichtspunkten.

Eine andere Methode, um Glas mit Hilfe eines Sinterprozesses herzustellen, stellt die pulvertechnologische Methode dar. Die pulvertechnologische Methode ist beispielsweise in der Patentschrift EP 0196140B1 beschrieben. Bei dem aus der EP 0196140 B1 bekannten Verfahren wird als Ausgangsmaterial nanoskaliges SiO₂-Pulver wie z. B. Aerosil OX-50 der DEGUSSA AG benutzt. Gegenüber den Sol-Gel-Methoden hat dieses Verfahren im bevorzugten Fall den Vorteil, daß keine alkoholischen Rohstoffe und Lösungsmittel verwendet werden müssen und Wasser als Dispergiermedium eingesetzt werden kann. Dies führt zu geringerer Belastung der Umwelt, der Vermeidung geruchsbelästigender Dämpfe und der Vermeidung von Brandgefahr sowie zu einer kostengünstigen Fertigung.

Die Glasherstellung nach der EP 0196140 B1 geht davon aus, daß eine Suspension des Glaspulvers hergestellt wird und diese Suspension zu einem Grünkörper weiterverarbeitet wird. Der Grünkörper kann nach dem Trocknen formstabil zu transparentem Glas verdichtet werden. Dies hat den Vorteil, daß ein Glasvorprodukt schon bei Raumtemperatur hergestellt werden kann und dieses beim Brand seine Gestalt und Form beibehält.

In der EP 0196140 B1 ist allerdings nur die Herstellung von Kieselglas beschrieben, das bei Temperaturen von ca. 1300 bis 1500° C gesintert wird. Diese Temperaturen sind für den Einsatz von MX als Dotiermaterial zu hoch, da bei diesen Temperaturen ein Großteil des Dotiermaterials sublimiert oder oxidiert ist. Ein weiterer Nachteil ist, daß aufgrund der hohen Temperaturen das Verfahren äußerst energieintensiv ist.

Weitere Verfahren, in denen nanoskaliges SiO₂-Pulver eingesetzt wird und zusätzlich zum SiO₂ noch weitere Komponenten verwendet werden, sind in den Patentschriften JP 62167233 A, JP 60171228 A, JP 62100428 A und JP 03159924 A beschrieben.

Gemäß JP 62167233 A, JP 60171228 A, JP 62100428 A und JP 03159924 A wird das nanoskalige SiO₂ allerdings nur als zusätzliche Komponente zu den in der Sol-Gel-Technik verwendeten Alkoxysilikaten wie z.B. TEOS verwendet. Diese Rohstoffe und die Verwendung von alkoholischen Lösungsmitteln führen dazu, daß auch bei der Herstellung dieser Gläser wiederum Belastungen der Umwelt auftreten. Außerdem müssen zur Herstellung der Gläser gemäß der JP 62167233 A, JP 60171228 A, JP 62100428 A und JP 03159924 A wiederum Temperaturen zwischen 1200° C und 2000° C angewandt werden.

Aus der US 5,122,178 und JP 60016830 A sind Herstellungsprozesse von CdS-, CdSe- und CdTe-dotierten Gläsern bekannt geworden. Die Verfahren dieser beiden Patentschriften gehen aber von einer Schmelze des Glases aus. In US 5,122,178 wird dabei wie im normalen Herstellungsprozeß dieser Gläser das Dotiermaterial bei der Schmelze zugeführt. Der einzige Unterschied zum etablierten Herstellungsprozeß sind veränderte Prozeßtemperaturen und Prozeßschritte. Auf die relativ hohen Prozeßtemperaturen von 1300° C bei der Glasschmelze kann hier jedoch nicht verzichtet werden. In der Patentschrift JP 60016830 A wird von einem zweistufigem Prozeß ausgegangen. Zuerst wird ein farbloses Grundglas erschmolzen, welches nach einem Mahlprozeß durch Zugabe des pulverförmigen CdS dotiert und schließlich gesintert wird. Nachteilig an dem Verfahren gemäß der JP 60016830 A ist zum einen der aufwendige mehrstufige Prozeß, zum anderen, daß es nach der Herstellungsmethode gemäß der JP 60016830 A nicht möglich ist, schon bei der Grünkörperherstellung die Formgebung des Endprodukts zu erreichen. So findet die Formgebung gemäß der JP 60016830 A durch die Sinterung eines Pulver-Preßlings statt. Die Formgebung während des Sinterprozesses ist aber insbesondere, wenn komplex geformte Körper hergestellt werden sollen, schwierig.

Aufgabe der Erfindung ist es somit, ein Herstellverfahren für optische Gläser anzugeben, das die Nachteile des Standes der Technik überwindet und insbesondere die Herstellung von Farbgläsern mit MX-Dotierstoffen ermöglicht. Das Verfahren soll umweltverträglich, kostengünstig und energieeffizient sein und keine Brandgefahr verursachen.

Erfindungsgemäß wird die Aufgabe durch ein Verfahren gemäß Anspruch 1 gelöst.

Die Erfinder haben erkannt, daß das erfindungsgemäße Verfahren in einem Viskositätsbereich durchgeführt wird, der weder dem klassischen Sinterprozeß mit einer Viskosität η > 1 × 10⁸ dPa s noch dem klassischen Schmelzprozeß mit einer Viskosität η < 1 × 10² dPa s entspricht, sondern in einem dazwischenliegenden Viskositätsbereich. Der erfindungsgemäße Prozeß wird daher als Flüssigphasensintern bzw. Hochviskosschmelzen bezeichnet. Vorteilhaft gegenüber dem Sinterprozeß ist, daß beim erfindungsgemäßen Prozeß Korngrenzen zwischen den Komponenten und damit auch Konzentrationsgradienten nicht nur durch Diffusionsprozesse abgebaut werden, sondern auch durch plastische Fließprozesse. Dies führt dazu, daß der erfindungsgemäße Prozeß deutlich effektiver als der klassische Sinterprozeß ist. Um die äußere Form vollständig zu erhalten, setzt man ein Hilfsmittel aus Keramik zur Stabilisierung zu. Gegenüber einem reinem Schmelzprozeß ist die deutlich niedrigere Temperatur ein Vorteil.

Gemäß dem Verfahren der Erfindung wird nach der pulvertechnologischen Methode zunächst ein Grünkörper umfassend pulverförmiges SiO₂ oder SiO₂-Suspension hergestellt, der gesintert werden kann. Zur Temperaturreduzierung des Sinterprozesses im Vergleich zum Stand der Technik und zur Abstimmung der Glaseigenschaften auf das Dotiermaterial werden neben dem pulverförmigen SiO₂ weitere Zusätze verwendet, wobei jedoch keine alkoholischen Lösungsmittel erforderlich sind.

Als Rohstoffe dienen SiO₂-Pulver mit einer Primärteilchengröße zwischen 8 nm und 800 nm, vorzugsweise 20 nm - 100 nm. oder SiO₂-Suspension. Als Rohstoffe für die Zusätze werden Borsäure, Zinkoxid, Kaliumcarbonat, Kalilauge und andere Verbindungen, die Netzwerkwandlereigenschaften besitzen verwendet. Die Zusätze können aber auch jede andere Art von Carbonaten, Laugen oder Basen, wie z. B. Natronlauge oder Kaliumhydrogenfluorid sein. Es ist dabei unerheblich, ob die Rohstoffe einzeln der Suspension zugeführt werden oder ob zwei oder mehr dieser Rohstoffe bereits als vorgefertigte pysikalische oder chemische Mehrkomponenten-Mischphasen in den Prozeß eingebracht werden. Des weiteren können Dispergierhilfen wie Ammoniumfluorid, weitere Laugen und Säuren wie z. B. Schwefelsäure oder Phosphorsäure zugegeben werden. Da diese Chemikalien standardmäßig auch in analytischer Reinheit angeboten werden , können mit Hilfe des erfindungsgemäßen Verfahrens hochreine optische Gläser erhalten werden, wobei der Grad der Reinheit der Gläser von den Verunreinigungen der zusätzlichen Glaskomponenten abhängt.

Die Herstellung eines Glases gemäß der vorliegenden Erfindung umfasst die Herstellung eines Grünkörpers aus den Ausgangsmaterialien umfassend SiO₂-Pulver oder SiO₂-Suspension und den Zusatzstoffen, wie bespielsweise Dispergierhilfen und aus der Sinterung bzw. auch der Schmelze des Glases aus diesen Grünkörpern.

Der Grünkörper wird durch Dispergieren und Lösen der Ausgangsmaterialien in beliebiger Reihenfolge in Wasser, optional auch einem alkoholischen Lösungsmittel hergestellt.

Um ein Farbglas zu erhalten, werden zusammen mit den Ausgangsmaterialien die Dotiersubstanz MX, wie z. B. CdS, CdSe, CdTe, aber auch Mischkristalle wie CdS/CdSe zusammen mit den Ausgangsmaterialien dispergiert oder gelöst. Anstelle der Verwendung von CdS, CdSe oder CdTe ist auch eine in-situ-Erzeugung der Dotiersubstanzen aus den Elementen, als Cd + Te→ CdTe, oder aus anderen Materialien, beispielsweise CdO, Na₂SeO₃ und reduzierenden Gasen möglich. Auch andere Farbstoffe wie z. B. Kupferindiumdiselenid (CulnSe₂) oder Übergangsmetalloxide wie z. B. CoO sind möglich.

Vorteilhafterweise erfolgt das Lösen und Dispergieren der Ausgangsmaterialen und eventueller Dotierstoffe zum Herstellen eines Grünkörpers derart, daß sich eine gießfähige oder streichfähige Suspension ergibt. In einer bevorzugten Ausführungsform wird die Suspension in eine Form gegossen. Nach der Verfestigung der Suspension bei Raumtemperaturen oder Temperaturen kleiner als 100°C, wird der Grünkörper bei Raumtemperatur oder bei Temperaturen bis zu 400° C getrocknet. Der getrocknete Grünkörper wird schließlich bei Temperaturen zwischen 600° C und 1200° C, vorzugsweise 700 bis 1100° C, je nach Glaszusammensetzung, gesintert oder geschmolzen.

Optional kann der Grünkörper zur Verbesserung der Homogenität und der Qualität des resultierenden Glases nochmals gemahlen werden oder gemahlen, anschließend dispergiert und getrocknet werden.

Die Gläser können übliche Läutermittel in üblichen Mengen enthalten. Als Läutermittel werden alle Komponenten verstanden, die im Temperaturbereich , vorgegeben durch das Verfahren, durch Redoxreaktionen Gase abgeben oder verdampfen. Bevorzugt werden Läutermittel, die neben der Läuterwirkung einen positiven Einfluß auf die Farbgebung als Folge des Eingriffs in den Redoxprozess haben. Redoxhilfsmittel sind z. B. As₂O₃, Sb₂O₃, As₂S₃ und Sb₂S₃.

Besonders vorteilhaft für die Schlierenqualität hat sich ein F-Anteil von max. 2Gew.% herausgestellt.

Die Erfindung soll nachfolgend anhand der Ausführungsbeispiele und der Figuren beispielhaft beschrieben werden.

Es zeigen:

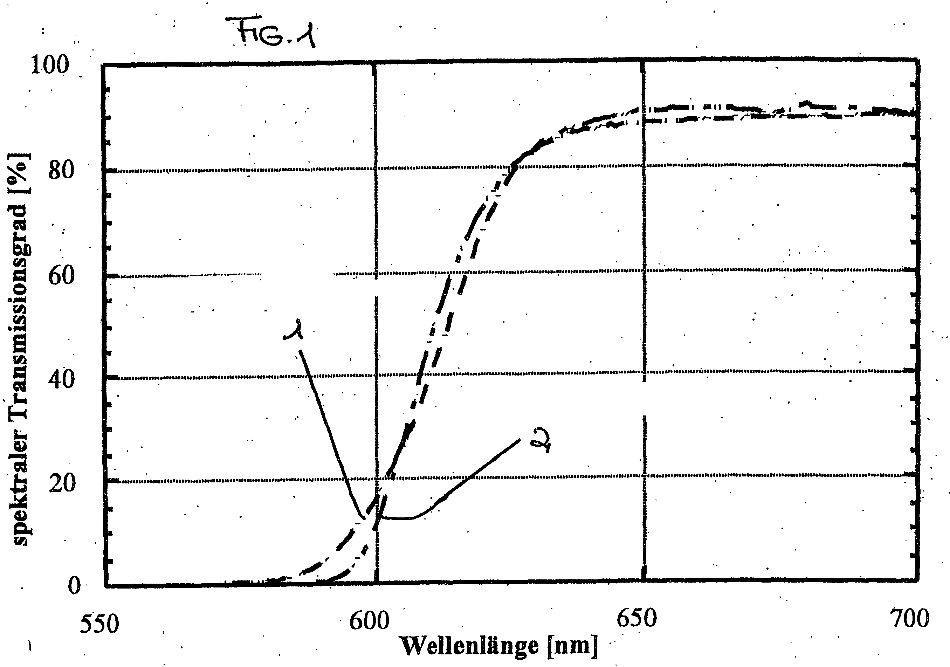

- Figur 1: den Transmissionsverlauf eines gemäß der Erfindung hergestellten Farbglases mit 0,234 Gew.-% CdSe + 0,200 CdS (Ausführungsbeispiel 3.3) sowie 0,234 CdSe + 0,208 CdS (Ausführungsbeispiel 3.6).

Zunächst wird die Herstellung des Grünkörpers für ein Farbglas gemäß dem erfindungsgemäßen Verfahren anhand von Ausführungsbeispielen beschrieben, wobei als MX-Dotierstoff CdS eingesetzt wird.

Als Ausgangsmaterialien werden in den vorliegenden Ausführungsbeispielen KOH, H₃BO₃, ZnO, KHF₂, SiO₂ und als Dotiermaterial CdS oder andere Farbstoffe verwandt.

Die Ausgangsmaterialien KOH, H₃BO₃, ZnO, KHF₂, CdS oder andere Farbstoffe sowie SiO₂ werden in geeigneter Reihenfolge in Wasser unter Rühren gelöst oder dispergiert. Optional kann das Einrühren der Rohstoffe auch unter Zuhilfenahme von Ultraschall erfolgen oder auch durch den Zusatz von Additiven zur Suspension, um das Dispergieren und Lösen der verschiedenen Rohstoffe zu erleichtern.

Die fertige Suspension wird in eine Form gegossen, in der sie sich verfestigt, und 1 bis 96 Stunden an Luft bis zu 100° C getrocknet. Nach dem Entformen wird der Grünkörper weitere 1 bis 96 Stunden bei Raumtemperatur und anschließend 1 bis 48 Stunden bei 40 bis 400° C getrocknet.

Das Flüssigphasensintern zu transparentem Glas geschieht bei Temperaturen zwischen 600 und 1200° C, je nach Glaszusammensetzung. Der nachträgliche Anlaufprozeß zur Bildung der CdS-Kristallite wird bei 400 bis 700° C durchgeführt, wobei Haltezeiten zwischen 5 und 170 h verwendet werden können.

Erfindungsgemäß können die nach dem zweistufigen Verfahren mit Hilfe eines Flüssigphasensinterprozesses hergestellten Gläser bei Temperaturen hergestellt werden, die ca. 200 bis 700° C unter der Herstellungstemperatur der Gläser bei einem reinen Schmelzverfahren liegen. Dies bedeutet eine Energieeinsparung beim Herstellungsprozeß, eine deutlich geringere Emission der toxischen Dotiermaterialien CdS, CdSe und CdTe, geringeren chemischen Angriff der Schmelzaggregate durch die aggressiven Glaszusammensetzungen und eine Einsparung an toxischem Dotiermaterial. Durch die Sinterbarkeit der Grünkörper beim zweistufigen erfindungsgemäßen Verfahren ist es außerdem möglich, den Formgebungsprozeß des Glasprodukts bei Raumtemperatur vorwegzunehmen, wodurch die Verluste bei der Bearbeitung, z. B. beim Sägen, Schleifen und Polieren deutlich reduziert werden. Durch die Möglichkeit, bei der Grünkörperherstellung Standardchemikalien der chemischen Industrie und der Glasindustrie verwenden zu können und den Herstellungsprozeß auf Wasserbasis ablaufen zu lassen, zeichnet sich dieses Verfahren des weiteren durch hohe Umweltfreundlichkeit aus.

In Tabelle 1 sind die Endzusammensetzungen verschiedener Gläser, die nach dem erfindungsgemäßen Prozeß hergestellt wurden, sowie die Sintertemperatur angegeben.

### Tabelle 1:

Zusammensetzung und Sintertemperatur von nach dem erfindungsgemäßen Verfahren hergestellten Farbgläsern mit CdS-Dotierung.

Die zugehörige Läutertemperatur ist in Tabelle 2 unter der jeweiligen Beispielnummer angegeben. Der geringe Unterschied im Farbstoffgehalt bewirkt keine nennenswerten Änderungen. Die Summe des Grundglases ist 100 %, der Farbstoff CdS wird additiv hinzugegeben.

| Beispiel | Komponente | 1.1 | 1.2 | 1.3 | 1.4 | 1.5 | 1.6 |
|---|---|---|---|---|---|---|---|
| Zusammensetzung | SiO₂ in % | 65.25 | 56.39 | 41.23 | 38.35 | 40.34 | 41.21 |
| | K₂O in % | 16.36 | 16.96 | 25.19 | 27.27 | 23.50 | 25.43 |
| | B₂O₃ in % | 7.31 | 15.16 | 15.39 | 14.32 | 11.79 | 9.81 |
| | ZnO in % | 10.87 | 11.28 | 11.45 | 10.65 | 15.78 | 16.48 |
| | F in % | 0.21 | 0.22 | 6.73 | 9.40 | 8.59 | 7.08 |
| | CdS in % | 0.73 | 0.71 | 0.50 | 0.49 | 0.49 | 0.52 |
| Sinter-temperatur | | 900° C | 850° C | 700° C | 650° C | 650° C | 700° C |

In Tabelle 2 sind die gleichen Gläser wie in Tabelle 1 dargestellt, mit dem Unterschied, daß hier die Dotierung CdSe ist. Gleiche Gläser sind mit denselben Nummern bezeichnet. Zu beachten ist, daß die Menge der Dotierung von dem Dotierstoff abhängt.

Um die Glasqualität, insbesondere im Hinblick auf die Minimierung der Blasenzahl zu verbessern, kann es von Vorteil sein, die Gläser aus Tabelle 1 nicht nur bis zu ihrer Sintertemperatur zu erhitzen, sondern die Temperatur noch etwas zu erhöhen. Dadurch erniedrigt sich die Viskosität der Gläser und eventuell entstandene Blasen können aus dem Glaskörper entweichen. In Tabelle 2 ist für die jeweiligen Ausführungsbeispiele die Temperatur angegeben, bei der noch im Glas enthaltene Blasen aus dem Glas entweichen. Diese Temperatur, die durch das Entweichen der Blasen gekennzeichnet ist, wird in vorliegender Anmeldung als "Läutertemperatur" bezeichnet.

Wie die Temperaturwerte deutlich zeigen, liegt die "Läutertemperatur" gemäß der Definition in dieser Anmeldung für die erfindungsgemäßen Gläser stets unter der Herstellungs- und Verarbeitungstemperatur von herkömmlich produzierten Gläsern.

### Tabelle 2:

Farbgläser mit vergleichbarer zu höheren Wellenlängen verschobener Steilkantencharakteristik wie die Gläser in Tabelle 1 mit gleicher Zusammensetzung und CdSe-Dotierung sowie deren Läutertemperatur.

Die zugehörige Läutertemperatur ist in Tabelle 1 unter der gleichen Beispielnummer angegeben. Der geringe Unterschied im Farbstoffgehalt bewirkt keine nennenswerte Änderung. Die Summe des Gesamtglases ist 100 %, der Farbstoff CdSe wird additiv hinzugegeben.

| Beispiel | Komponente | 2.1. | 2.2 | 2.3 | 2.4 | 2.5 | 2.6 |
|---|---|---|---|---|---|---|---|
| Zusammensetzung | SiO₂ in % | 65.25 | 56.39 | 41.23 | 38.35 | 41.21 | 40.34 |
| | K₂O in % | 16.36 | 16.96 | 25.19 | 27.27 | 23.50 | 25.43 |
| | B₂O₃ in % | 7.31 | 15.16 | 15.39 | 14.32 | 11.79 | 9.81 |
| | ZnO in % | 10.87 | 11.28 | 11.45 | 10.65 | 15.78 | 16.48 |
| | F in % | 0.21 | 0.22 | 6.73 | 9.40 | 8.59 | 7.08 |
| | CdSe in % | 0.59 | 0.57 | 0.39 | 0.36 | 0.38 | 0.39 |
| Läuter-temperatur | | 1200°C | 1150°C | 950° C | 870° C | 890° C | 950° C |
| | | | | | | | |

Obwohl die Ausführungsbeispiele 1.1 bis 2.6 in Tabelle 1 und 2 als dotierte, gefärbte Gläser gezeigt sind, können die gleichen Gläser auch statt mit einer CdS-, CdSe-Dotierung mit einer gemischten CdS/CdSe-Dotierung hergestellt werden.

Auch andere färbende Dotierungen, wie sie in der Glasindustrie gebräuchlich sind, wie zum Beispiel CoO, sind möglich.

Nachfolgend soll für das Ausführungsbeispiel 1.6 beispielhaft für alle anderen Ausführungsbeispiele der detaillierte Weg zur Herstellung des zu sinternden Grünkörpers angegeben werden. Der Grünkörper für Ausführungsbeispiel 1.6 wird hergestellt über eine Suspension der folgenden Stoffe in 90 I Wasser und enthält:

| Oxid | Gew.% | Rohstoff | Einwaage (kg) |
|---|---|---|---|
| SiO₂ | 41,21 | SiO₂ | 41,21 |
| K₂O | 25,43 | KOH | 22,67 |
| B₂O₃ | 9,81 | H₃BO₃ | 17,51 |
| ZnO | 16,48 | ZnO | 16,48 |
| F | 7,08 | KHF₂ | 14,42 |
| CdS | 0,52 | CdS | 0,52 |
| | | | |

Die verschiedenen Rohstoffe KOH, H₃BO₃, ZnO, KHF₂, CdS, SiO₂ werden in geeigneter Reihenfolge in Wasser unter Rühren gelöst oder dispergiert. Dadurch entsteht eine streichfähige Suspension, die alle Komponenten des späteren transparenten, gefärbten, optischen Glases enthält.
Die fertige Suspension wird in eine beliebige Form gestrichen, in der sie sich verfestigt und wird 24 h an Luft getrocknet. Nach dem Entformen wird der Grünkörper weitere 48 h bei Raumtemperatur und anschließend 24 h bei 120° C getrocknet.

Die Herstellung über Flüssigphasensintern bzw. Hochviskosschmelzen geschieht bei 950°C und einer Haltezeit von 1 h. Der nachträgliche Anlaufprozeß zur Bildung der CdS-Kristallite wird bei 500°C durchgeführt, mit einer Haltezeit von 10 h.

In nachfolgender Tabelle 3 sind Ausführungsbeispiele für Farbgläser mit gemischter Farbstoffzugabe, d. h. CdS/CdSe-Dotierung angegeben. Die Summe des Grundglases ist wieder 100 %; der Farbstoff CdS/CdSe wird additiv hinzugegeben. Die zugehörige Läutertemperatur ist in Tabelle 3 unter der jeweiligen Beispielnummer angegeben.

**Tabelle 3:**

| Gläser mit CdS/CdSe-Dotierung | | | |
|---|---|---|---|
| Beispiel | Komponente | 3.3 | 3.6 |
| Zusammensetzung | SiO₂ in % | 41,23 | 41,21 |
| | K₂O in % | 25,19 | 25,43 |
| | B₂O₃ in % | 15,39 | 9,81 |
| | ZnO in % | 11,45 | 16,48 |
| | F in % | 6,73 | 7,08 |
| | CdS in % | 0,200 | 0,208 |
| | CdSe in % | 0,234 | 0,234 |
| Läutertemperatur | | 980° C | 950° C |

In Figur 1 ist der Transmissionsverlauf eines flüssigphasengesinterten bzw. hochviskos geschmolzenen Farbglases mit 0,234 CdSe + 0,200 CdS gemäß Ausführungsbeispiel 3.3 und Ausführungsbeispiel 3.6 in Tabelle 3 im Wellenlängenbereich von 500 bis 700 mm gezeigt. Ausführungsbeispiel 3.3 gemäß Tabelle 3 ist mit der Bezugsziffer 1 belegt, Ausführungsbeispiel 3.6 gemäß Tabelle 3 mit Bezugsziffer 2.

Mit dem erfindungsgemäßen Verfahren wird erstmals ein gegenüber herkömmlichen Herstellungsprozessen, bei denen diese Gläser aus den verschiedenen Rohstoffen erschmolzen werden, ein Verfahren angegeben, bei dem zunächst ein Grünkörper hergestellt wird, der zu transparenten Glas verdichtet wird. Durch diesen Herstellungsprozeß ist es nicht nötig, die Glasrohstoffe bis zu ihrer Schmelztemperatur im Viskositätsbereich < 10² dPa s zu erhitzen. Dementsprechend können die Prozeßtemperaturen deutlich reduziert werden. Im Vergleich zum herkömmlichen Verfahren, bei dem 1200 bis 1400° C zur Glasschmelze nötig sind, muß bei dem Verfahren gemäß dieser Erfindung nur eine Temperatur von 600 bis 1200° C angewandt werden. Dies ist insbesondere bei der Herstellung von Farbgläsern, die beispielsweise als Steilkantenfilter eingesetzt werden können, von besonderem Interesse, da das für Farbgläser notwendige Dotiermaterial MX toxisch und bei höheren Temperaturen leicht flüchtig ist. Das erfindungsgemäße Verfahren hat daher bei der Herstellung derartiger Gläser im Vergleich zum herkömmlichen Schmelzverfahren neben dem deutlich geringeren Energieverbrauch noch den Vorteil, daß durch die niedrige Temperatureinwirkung und auch durch eine kürzere Haltezeit der Schmelz- bzw. Sintertemperatur, die Emission des Dotiermaterials deutlich reduziert wird. Aus diesem Grunde ist das erfindungsgemäße Verfahren auch vom Umweltaspekt her den bestehenden Verfahren überlegen.

Weiter wird vermieden, daß die äußerst aggressive Glasschmelze das Schmelzaggregat stark korrodiert und somit schnell unbenutzbar macht.

## Patentansprüche

1. Verfahren zur Herstellung von optischen Gläsern und Farbgläsern mit Hilfe eines Flüssigphasensinterprozesses aus einem Ausgangsmaterial umfassend wenigstens SiO₂-Pulver sowie Zusatzstoffe zur Reduzierung der Temperatur des Flüssigphasensinterprozesses im Vergleich zum Kieselglas oder Zusatzstoffe zum Verändern der Glaseigenschaften von Kieselgas umfassend die nachfolgenden Schritte:
1.1 die Ausgangsmaterialien werden in beliebiger Reihenfolge in einem flüssigen Medium soweit hierin löslich gelöst und soweit hierin nicht löslich dispergiert ergebend eine Suspension
1.2 aus dem gelösten und dispergierten Ausgangsmaterial wird ein Grünkörper hergestellt
1.3 der Grünkörper wird getrocknet
1.4 der getrocknete Grünkörper wird bei Temperaturen geringer als 1200° C, insbesondere im Temperaturbereich von 600° C bis 1200° C flüssigphasengesintert.

2. Verfahren nach Anspruch 1, **dadurch gekennzeichnet, daß** das SiO₂-Pulver ein nanoskaliges SiO₂-Pulver ist.

3. Verfahren nach Anspruch 1 oder 2, **dadurch gekennzeichnet, daß** der Grünkörper durch Gießen, Streichen oder Extrudieren der Suspension in eine Form erhalten wird.

4. Verfahren nach Anspruch 3, **dadurch gekennzeichnet, daß** die in die Form gegossene, gestrichene oder extrudierte Suspension vor dem Trocknen des Grünkörpers bei Temperaturen geringer als 100° C, insbesondere bei Raumtemperatur verfestigt wird.

5. Verfahren nach einem der Ansprüche 1 bis 4, **dadurch gekennzeichnet, daß** der Grünkörper bei Temperaturen kleiner 400° C getrocknet wird.

6. Verfahren nach einem der Ansprüche 4 oder 5, **dadurch gekennzeichnet, daß** der Grünkörper zum Trocknen aus der Form entnommen wird und der entformte Grünkörper getrocknet wird.

7. Verfahren nach einem der Ansprüche 1 bis 6, **dadurch gekennzeichnet, dass** der getrocknete Grünkörper nochmals gemahlen wird.

8. Verfahren nach einem der Ansprüche 1 bis 7, **dadurch gekennzeichnet, dass** der getrocknete Grünkörper nochmals gemahlen und anschließend dispergiert und getrocknet wird.

9. Verfahren nach einem der Ansprüche 1 bis 8, **dadurch gekennzeichnet, daß** das SiO₂-Pulver eine Primärteilchengröße zwischen 8 nm und 800 nm aufweist.

10. Verfahren nach Anspruch 9, **dadurch gekennzeichnet, daß** die Teilchengröße 20 nm - 100 nm liegt.

11. Verfahren nach einem der Ansprüche 1 bis 10, **dadurch gekennzeichnet, daß** Dispergierhilfen zu den Ausgangsmaterialien hinzugegeben werden.

12. Verfahren nach einem der Ansprüche 1 bis 11, **dadurch gekennzeichnet, daß** zur Herstellung von Farbgläsern die Suspension des weiteren Dotiersubstanzen umfaßt.

13. Verfahren nach einem der Ansprüche 1 bis 12, **dadurch gekennzeichnet, daß** das flüssige Medium Wasser ist.

14. Verfahren nach einem der Ansprüche 1 bis 12, **dadurch gekennzeichnet, daß** das flüssige Medium ein Alkohol, insbesondere Ethanol oder eine Mischung aus Wasser und einem Alkohol ist.

15. Verfahren nach einem der Ansprüche 1 bis 14, **dadurch gekennzeichnet, daß** die Zusatzstoffe zur Reduzierung der Sinterund/oder der Schmelztemperatur der Gläser im Vergleich zu Kieselglas eines oder mehrere der nachfolgenden Elemente enthalten:
Kalium, Natrium, Fluor oder auch andere Elemente mit Netzwerkwandlereigenschaften, insbesondere alle R¹₂O und R²O-Verbindungen, wobei R¹ alle Elemente der ersten Hauptgruppe und R² alle Elemente der zweiten Hauptgruppe bezeichnet, wobei diese Elemente als Carbonat-Verbindungen, als lösliche Salze, als Säuren oder Laugen eingebracht werden können, insbesondere als Kaliumcarbonat, Kalilauge sowie Kaliumfluorid oder auch Kaliumhydrogenfluorid und die Zusatzstoffe zur Veränderung der Glaseigenschaften im Vergleich zu Kieselglas insbesondere die Oxide von Bor und Zink umfassen, wobei diese Stoffe auch durch lösliche Komponenten zugegeben werden können, insbesondere als Borsäure oder auch in kolloidaler, oxidischer Form, insbesondere als kolloidales Zinkoxid.

16. Verfahren nach einem der Ansprüche 1 bis 15, **dadurch gekennzeichnet, daß** die Dispergierhilfen eine oder mehrere der nachfolgenden Verbindungen:
Ammoniumfluorid, Laugen oder Säuren, insbesondere Schwefelsäure oder Phosphorsäure umfassen.

17. Verfahren nach einem der Ansprüche 1 bis 16, **dadurch gekennzeichnet, daß** die Ausgangsmaterialien umfassen:
SiO₂, KOH, H₃BO₃, ZnO, KHF₂, KF, K₂CO₃, B₂O₃ oder aus Mischungen aus mehrerer dieser Substanzen.

18. Verfahren nach einem der Ansprüche 12 bis 17, **dadurch gekennzeichnet, daß** die Dotiersubstanzen MX-Halbleiterdotierungen umfassen, wobei M für das Element Cd oder Cd und Zn und X für das Element S, Se oder Te steht.

19. Verfahren nach Anspruch 18, **dadurch gekennzeichnet, daß** die Dotiersubstanzen CdTe, CdS, CdSe sowie Mischkristalle aus CdS/CdSe umfassen.

20. Gläser, hergestellt nach einem Verfahren gemäß einem der Ansprüche 1 bis 17 umfassend:
30 - 75 Gew.-% SiO₂
5 - 35 Gew.-% K₂O
4 - 17 Gew.-% B₂O₃
0 - 37 Gew.-% ZnO
0,01 - 10 Gew.-% F

21. Gläser nach Anspruch 20, **dadurch gekennzeichnet, dass** das Glas F im Bereich 0,01-2 Gew.-% umfaßt.

22. Gläser nach Anspruch 20 oder 21, **dadurch gekennzeichnet, daß** die Gläser des weiteren oder alternativ umfassen:
die Oxide der Elemente Al, Ti, Zr, P, Mg, Ca, Sr, Ba, Ce, La, Na, Li, Rb, Cs, Pb.

23. Gläser, hergestellt nach einem Verfahren gemäß einem der Ansprüche 1 bis 19, umfassend:
30 - 75 Gew.-% SiO₂
5 - 35 Gew.-% K₂O
4 - 17 Gew.-% B₂O₃
0 - 30 Gew.-% ZnO
0,01 - 10 Gew.-% F

24. Gläser nach Anspruch 23, **dadurch gekennzeichnet, daß** die Gläser des weiteren oder alternativ umfassen:
die Oxide der Elemente Al, Ti, Zr, P, Mg, Ca, Sr, Ba, Ce, La, Na, Li, Rb, Cs.

25. Glas gemäß Anspruch 24, umfassend:
30 - 75 Gew.-% SiO₂
5 - 35 Gew.-% K₂O
4 - 17 Gew.-% B₂O₃
0 - 30 Gew.-% ZnO
0,01 - 10 Gew.-% F
0 - 5 Gew.-% TiO₂

26. Gläser nach einem der Ansprüche 23 bis 25, **dadurch gekennzeichnet, daß** die Gläser Farbgläser sind, die eine MX-Halbleiterdotierung mit M Cd oder und Zn und X S, Se oder Te umfassen.

27. Farbglas nach Anspruch 26, **dadurch gekennzeichnet, daß** es optional anstelle der oder zusätzlich zu den MX-Halbleiterdotierungen mit ionischen Farbstoffen wie Co, Cu, Ni usw. dotiert ist.

28. Farbglas nach Anspruch 26 oder 27, **dadurch gekennzeichnet, daß** die MX-Halbleiterdotierung einen Gewichtsanteil von 0,2 - 0,9 Gew.-% am optischen Glas aufweist.

29. Optischer Steilkantenfilter für Wellenlängen zwischen 350 nm und 850 nm, **dadurch gekennzeichnet, daß** der optische Steilkantenfilter ein Farbglas gemäß einem der Ansprüche 26 bis 28 umfaßt.
